# FASCICULE DE BREVET EUROPEEN

(11) **EP 4 124 575 B1**
(45) Date de publication et mention de la délivrance du brevet: **17.07.2024**
(21) Numéro de dépôt: 22186620.5
(22) Date de dépôt: 25.07.2022
(51) Int. Cl.: B64D 27/40

(54) **ENSEMBLE PROPULSIF POUR AÉRONEF COMPORTANT UN TURBORÉACTEUR, UN MÂT ET DES MOYENS D ACCROCHAGE DU TURBORÉACTEUR AU MÂT**
ANTRIEBSBAUGRUPPE FÜR FLUGZEUGE MIT EINEM TURBOJET, EINEM MAST UND MITTELN ZUM BEFESTIGEN DES TURBOJET AN DEM MAST
PROPULSION ASSEMBLY FOR AIRCRAFT COMPRISING A TURBOJET, A MAST AND MEANS FOR ATTACHING THE TURBOJET TO THE MAST

(30) Priorité: 28.07.2021 FR 2108191
(43) Date de publication de la demande: 01.02.2023
(73) Titulaire: Airbus Operations SAS, 31060 Toulouse (FR)
(72) Inventeur: MESSINA, Paolo, 31060 TOULOUSE (FR); PAUTIS, Olivier, 31060 TOULOUSE (FR)
(74) Mandataire: Cabinet Le Guen Maillet

(56) Documents cités:
- FR-A1- 2 963 320
- US-A1- 2008 232 924
- US-A1- 2013 302 157

## Description

### DOMAINE TECHNIQUE

La présente invention se rapporte au domaine général de l'accrochage d'un turboréacteur sous la voilure d'un aéronef. Elle concerne en particulier un ensemble propulsif comprenant un turboréacteur, en particulier à double flux, un mât ainsi qu'un dispositif d'accrochage destiné à l'accrochage du turboréacteur sous le mât. Elle concerne également un aéronef équipé d'un tel ensemble propulsif.

### ÉTAT DE LA TECHNIQUE ANTÉRIEURE

Un ensemble propulsif de l'état de la technique est fixé sous une voilure d'un aéronef qui comporte un turboréacteur et un mât d'accrochage par l'intermédiaire duquel le turboréacteur est fixé sous la voilure. Globalement, le mât d'accrochage comporte une structure rigide, également appelée structure primaire, portant des premiers éléments de fixation destinés à l'accrochage du turboréacteur.

Ces premiers éléments de fixation sont formés d'une attache moteur avant, d'une attache moteur arrière, et d'un dispositif de reprise des efforts de poussée générés par le turboréacteur.

Le mât d'accrochage comporte en outre des seconds éléments de fixation permettant la fixation du mât d'accrochage à la voilure.

Le turboréacteur comporte à l'avant un carter de soufflante entourant un canal annulaire de soufflante, et vers l'arrière un carter central de plus petite dimension, renfermant le coeur du turboréacteur.

L'attache moteur avant est interposée entre une extrémité avant de la structure rigide et une partie supérieure et avant du carter central et l'attache moteur arrière est interposée entre la structure rigide et une partie supérieure et arrière du carter central. Le dispositif de reprise des efforts de poussée générés par le turboréacteur comprend deux bielles disposées de part et d'autre d'un plan vertical médian du turboréacteur et articulées, d'une part, sur le carter central, et, d'autre part, sur un palonnier unique fixé à la structure rigide. Le dispositif de reprise des efforts de poussée formé par les deux bielles et le palonnier est conçu pour reprendre l'intégralité ou la majorité des efforts orientés selon la direction longitudinale X du turboréacteur.

L'attache moteur avant comporte de part et d'autre du mât une bielle et chaque bielle est fixée de manière articulée par une de ses extrémités au mât et est fixée de manière articulée par l'autre de ses extrémités au carter central. L'une des bielles est fixée par deux points de liaison au mât et par un point de liaison au carter central, et la deuxième bielle est fixée par un point de liaison au mât et par un point de liaison au carter central.

L'attache moteur avant permet de reprendre une partie des efforts orientés selon les directions Y et Z ainsi qu'un moment de torsion Mx. L'attache moteur arrière permet également de reprendre une partie des efforts orientés selon les directions Y et Z.

Les documents FR-A-2 963 320, US-A-2008/232924 et US-A-2013/302157 divulguent des structures de l'état de la technique.

Bien qu'une telle structure donne satisfaction, il est souhaitable de trouver un arrangement qui permet une reprise différente des efforts en particulier au niveau de l'attache moteur avant et du dispositif de reprise des efforts de poussée.

### EXPOSÉ DE L'INVENTION

Un objet de la présente invention est de proposer un ensemble propulsif comprenant un turboréacteur, un mât et un dispositif d'accrochage destiné à l'accrochage du turboréacteur sous le mât, et qui permet une redistribution différente des reprises d'effort.

À cet effet, est proposé un ensemble propulsif d'un aéronef, ledit ensemble propulsif comportant :
- un turboréacteur comportant un carter central autour d'un axe longitudinal et présentant un plan médian vertical passant par l'axe longitudinal,
- un mât d'accrochage présentant une structure rigide qui prend la forme prend la forme d'un caisson qui comporte une paroi inférieure, une paroi supérieure, deux parois latérales et une paroi frontale,
- une attache moteur avant,
- une attache moteur arrière interposée entre une zone médiane de la structure rigide et une partie supérieure arrière du carter central, et
- un dispositif de reprise des efforts de poussée générés par le turboréacteur,

où l'attache moteur avant comporte de part et d'autre du plan médian, une bielle avant et chaque bielle avant est fixée de manière articulée par un point de liaison à une extrémité avant de la structure rigide et par un point de liaison à une ferrure avant solidaire d'une partie supérieure du carter central, et
où le dispositif de reprise des efforts de poussée du turboréacteur comporte deux bielles centrales disposées de part et d'autre du plan médian, pour chaque bielle centrale, une première ferrure solidaire de la structure rigide et une deuxième ferrure solidaire d'une partie avant du carter central, où les deux premières ferrures sont indépendantes l'une de l'autre, où chaque bielle centrale est fixée de manière articulée par une de ses extrémités à la première ferrure et par l'autre de ses extrémités à la deuxième ferrure et où l'attache moteur arrière comporte une bielle arrière fixée de manière articulée par deux points de liaison à une ferrure arrière solidaire du carter central et par un point de liaison à une ferrure supérieure solidaire de la structure rigide,
l'ensemble propulsif étant caractérisé en ce que chaque première ferrure est fixée à une des parois latérales de la structure rigide.

Avec un tel arrangement, la reprise des efforts se fait par paire au niveau des différents plans.

L'invention propose également un aéronef comportant une voilure et un ensemble propulsif selon la variante précédente dont la structure rigide est fixée sous la voilure.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 représente une vue de côté d'un aéronef selon l'invention,
Fig. 2 est une vue en perspective d'un ensemble propulsif selon l'invention, et

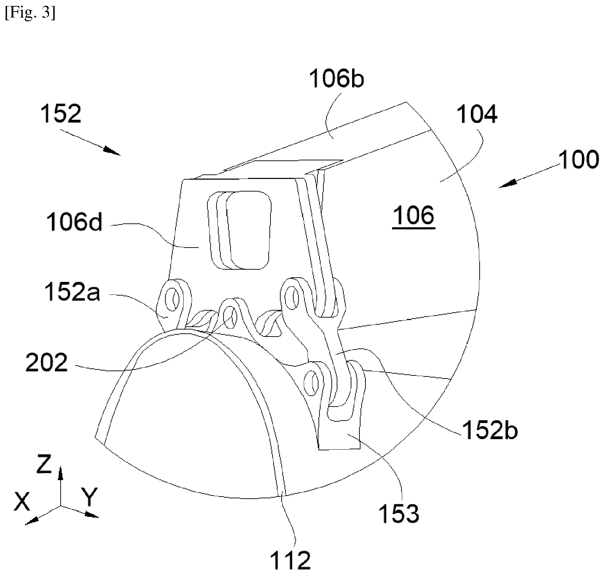

Fig. 3 est un agrandissement de l'attache moteur avant de la Fig. 2.

### EXPOSÉ DÉTAILLÉ DE MODES DE RÉALISATION

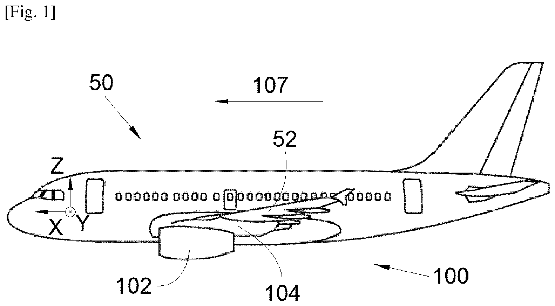

La Fig. 1 montre un aéronef 50 qui présente une voilure 52 sous laquelle est monté un ensemble propulsif 100 qui comporte un turboréacteur 102 et un mât d'accrochage 104.

Par convention, on appelle X la direction longitudinale du turboréacteur 102, cette direction X étant parallèle à un axe longitudinal de ce turboréacteur 102. D'autre part, on appelle Y la direction transversale du turboréacteur 102 qui est horizontale lorsque l'aéronef est au sol, et Z la direction verticale ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef lors du fonctionnement du turboréacteur 102, cette direction étant représentée schématiquement par la flèche 107.

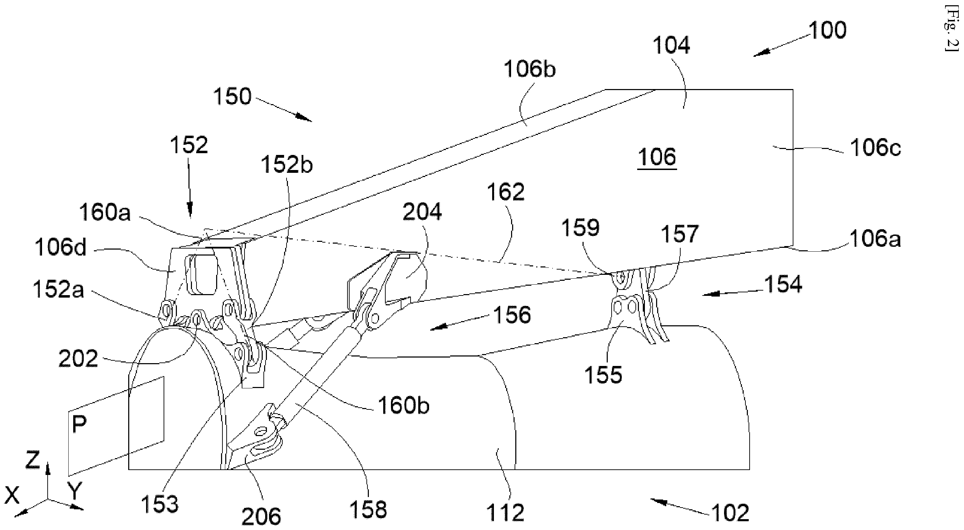

La Fig. 2 montre l'ensemble propulsif 100 qui comporte le turboréacteur 102 et le mât d'accrochage 104 par lequel le turboréacteur 102 est fixé à la voilure 52. Le mât d'accrochage 104 est ici représenté par sa structure rigide 106, également appelée structure primaire, portant des premiers éléments de fixation 150 destinés à l'accrochage du turboréacteur 102. La structure rigide 106 s'étend selon la direction longitudinale X entre une extrémité avant et une extrémité arrière entre lesquelles se trouve une zone médiane.

Dans le mode de réalisation de l'invention présenté sur la Fig. 2, la structure rigide 106 prend la forme d'un caisson qui comporte une paroi inférieure 106a, une paroi supérieure 106b, deux parois latérales 106c et une paroi frontale 106d.

Ces premiers éléments de fixation sont formés d'une attache moteur avant 152, d'une attache moteur arrière 154, ainsi que d'un dispositif de reprise 156 pour reprendre les efforts de poussée générés par le turboréacteur 102.

Le mât d'accrochage 104 comporte en outre des seconds éléments de fixation permettant la fixation du mât d'accrochage 104, et plus particulièrement de la structure rigide 106, à la voilure 52. Les seconds éléments de fixation ne sont pas représentés sur les Figs., car elles sont hors du périmètre de l'invention et peuvent prendre toutes formes connues par l'homme du métier.

Le turboréacteur 102 comporte à l'avant un carter de soufflante entourant un canal annulaire de soufflante (également non représenté ici), et à l'intérieur et vers l'arrière du carter de soufflante, un carter central 112 de plus petite dimension, renfermant le coeur du turboréacteur 102 autour d'un axe longitudinal.

L'attache moteur avant 152 est interposée directement entre une extrémité avant de la structure rigide 106, ici la paroi frontale 106d, et une partie supérieure et avant du carter central 112 par l'intermédiaire d'une ferrure avant 153 solidaire de ladite partie supérieure et avant du carter central 112, ladite partie supérieure étant au niveau d'un plan médian vertical XZ du turboréacteur 102 qui passe par l'axe longitudinal du turboréacteur 102 et qui est par la suite appelé plan médian P.

Le mât d'accrochage 104 est globalement symétrique par rapport au plan médian P.

L'attache moteur arrière 154 est interposée directement entre la zone médiane de la structure rigide 106, ici la paroi inférieure 106a, et une ferrure arrière 155 solidaire d'une partie supérieure arrière du carter central 112.

Le dispositif de reprise 156 comprend deux bielles centrales 158 disposées de part et d'autre du plan médian P et articulées, d'une part, à l'avant, sur une partie avant du carter central 112, et, d'autre part, à l'arrière sur la structure rigide 106 entre l'extrémité avant et la zone médiane.

L'attache moteur avant 152 comporte de part et d'autre du plan médian P, une bielle avant 152a-b et chaque bielle avant 152a-b est fixée de manière articulée par une de ses extrémités à l'extrémité avant de la structure rigide 106, ici la paroi frontale 106d, et est fixée de manière articulée par l'autre de ses extrémités à la ferrure avant 153.

Dans le mode de réalisation de l'invention, chaque bielle avant 152a-b est une bielle à deux points de fixation et est fixée par un seul point de liaison à la structure rigide 106 et par un seul point de liaison à la ferrure avant 153.

Dans le mode de réalisation de l'invention présenté ici, pour chaque bielle avant 152a-b, chaque point de liaison à la structure rigide 106 et à la ferrure avant 153 est constitué par une chape femelle réalisée, respectivement dans la bielle avant 152a-b et dans la ferrure avant 153, par une chape mâle réalisée respectivement par la structure rigide 106 et la bielle avant 152a-b et par un axe de cisaillement, par exemple simple, qui traverse la chape femelle et s'emmanche dans la chape mâle à travers une liaison rotule.

Du fait de la présence d'un seul point de liaison à l'extrémité de chaque bielle avant 152a-b, chaque bielle avant 152a-b permet une reprise d'un effort le long de ladite bielle avant 152a-b et cet effort comporte des composantes en Y et Z dans un plan frontal perpendiculaire à la direction longitudinale X et contenant les quatre points de liaison des bielles avant 152a-b. La ferrure avant 153 et les bielles avant 152a-b définissent un chemin primaire d'efforts.

Un tel arrangement évite également l'apparition d'un moment Mx au niveau du plan frontal ce qui permet d'avoir des éléments plus légers et moins chers.

La direction de l'effort le long de la bielle avant 152a est représentée par la ligne 160a et la direction de l'effort le long de la bielle avant 152b est représentée par la ligne 160b et ces deux droites sont dans le plan frontal et concourantes au niveau d'un point d'intersection.

Pour des raisons de sécurité, l'attache moteur avant 152 comporte un point de liaison supplémentaire 202 disposé de manière centrale sur le plan médian P et assure une liaison supplémentaire entre la structure rigide 106 et à la ferrure avant 153. Le point de liaison supplémentaire 202 prend la forme d'un point de fixation de sécurité en attente (dit « waiting fail-safe » en langue anglo-saxonne) qui compense une défaillance du chemin primaire d'efforts, c'est-à-dire d'au moins une des bielles avant 152a-b.

Le point de fixation de sécurité en attente 202 est constitué par exemple d'une chape femelle réalisée dans la ferrure avant 153, d'une chape mâle réalisée par la paroi frontale 106d de la structure rigide 106 et d'un axe emmanché dans ladite chape femelle et qui traverse la chape mâle à travers un alésage prévu à cet effet et dont le diamètre est supérieur au diamètre de l'axe. Ainsi, en fonctionnement normal, il n'y a aucun contact entre l'axe et la paroi frontale 106d de la structure rigide 106, et en cas de rupture de l'une des bielles avant 152a-b, le carter central 112 se déplacerait et l'axe vient alors en contact avec la paroi frontale 106d de la structure rigide 106.

L'attache moteur arrière 154 comporte une bielle arrière 157 fixée de manière articulée à la ferrure arrière 155 et à une ferrure supérieure 159 solidaire de la structure rigide 106, ici de la paroi inférieure 106a.

Dans le mode de réalisation de l'invention, la bielle arrière 157 est une bielle à trois points de fixation et est fixée par un point de liaison à la ferrure supérieure 159 et par deux points de liaison à la ferrure arrière 155.

Dans le mode de réalisation de l'invention présenté ici, chaque point de liaison de la bielle arrière 157 à la ferrure supérieure 159 et à la ferrure arrière 155 est constitué par une chape femelle réalisée dans les ferrures 155 et 159, par une chape mâle constituée de la bielle arrière 157 et par un axe de cisaillement, par exemple simple, qui traverse la chape femelle et s'emmanche dans la chape mâle dans un alésage de la bielle arrière 157 prévu à cet effet à travers une liaison rotule. Pour le point de fixation de sécurité en attente 202, l'axe de cisaillement est préférentiellement un axe double.

La bielle arrière 157 permet une reprise des efforts en Z et en Y dans un plan arrière perpendiculaire à la direction longitudinale X et contenant les trois points de liaison de la bielle arrière 157.

La ligne 162 passant respectivement par le point d'intersection des deux axes 160a-b des bielles avant 152a-b et le centre du point de liaison de la bielle arrière 157 à la ferrure supérieure 159 est une ligne dite de torsion (dite « swing line » en anglais).

Le dispositif de reprise 156 comporte pour chaque bielle centrale 158, une première ferrure 204 solidaire de la structure rigide 106 et une deuxième ferrure 206 solidaire du carter central 112.

Les deux premières ferrures 204 sont indépendantes l'une de l'autre et chaque première ferrure 204 est fixée sur un des côtés de la structure rigide 106 à une des parois latérales 106c.

Chaque bielle centrale 158 est fixée de manière articulée par une de ses extrémités à la première ferrure 204 et par l'autre de ses extrémités à la deuxième ferrure 206.

## Revendications

1. Ensemble propulsif (100) d'un aéronef (50), ledit ensemble propulsif (100) comportant:
- un turboréacteur (102) comportant un carter central (112) autour d'un axe longitudinal et présentant un plan médian (P) vertical passant par l'axe longitudinal,
- un mât d'accrochage (104) présentant une structure rigide (106) qui prend la forme d'un caisson qui comporte une paroi inférieure (106a), une paroi supérieure (106b), deux parois latérales (106c) et une paroi frontale (106d),
- une attache moteur avant (152),
- une attache moteur arrière (154) interposée entre une zone médiane de la structure rigide (106) et une partie supérieure arrière du carter central (112), et
- un dispositif (156) de reprise des efforts de poussée générés par le turboréacteur (102),
où l'attache moteur avant (152) comporte de part et d'autre du plan médian (P), une bielle avant (152a-b) et chaque bielle avant (152a-b) est fixée de manière articulée par un point de liaison à une extrémité avant de la structure rigide (106) et par un point de liaison à une ferrure avant (153) solidaire d'une partie supérieure du carter central (112), et
où le dispositif (156) de reprise des efforts de poussée du turboréacteur comporte deux bielles centrales (158) disposées de part et d'autre du plan médian (P), pour chaque bielle centrale (158), une première ferrure (204) solidaire de la structure rigide (106) et une deuxième ferrure (206) solidaire d'une partie avant du carter central (112), où les deux premières ferrures (204) sont indépendantes l'une de l'autre, où chaque bielle centrale (158) est fixée de manière articulée par une de ses extrémités à la première ferrure (204) et par l'autre de ses extrémités à la deuxième ferrure (206) et où l'attache moteur arrière (154) comporte une bielle arrière (157) fixée de manière articulée par deux points de liaison à une ferrure arrière (155) solidaire du carter central (112) et par un point de liaison à une ferrure supérieure (159) solidaire de la structure rigide (106),
l'ensemble propulsif (100) étant **caractérisé en ce que** chaque première ferrure (204) est fixée à une des parois latérales (106c) de la structure rigide (106).

2. Aéronef (100) comportant une voilure (52) et un ensemble propulsif (100) selon la revendication précédente dont la structure rigide (106) est fixée sous la voilure (52).

## Patentansprüche

1. Antriebsbaugruppe (100) eines Flugzeugs (50), wobei die Antriebsbaugruppe (100) umfasst:
- ein Turbinen-Strahltriebwerk (102), das ein zentrales Gehäuse (112) um eine Längsachse umfasst und eine vertikale Mittelebene (P) aufweist, die durch die Längsachse verläuft,
- einen Aufhängungspylon (104), der eine starre Struktur (106) aufweist, die die Form eines Kastens annimmt, der eine untere Wand (106a), eine obere Wand (106b), zwei seitliche Wände (106c) und eine stirnseitige Wand (106d) umfasst,
- eine vordere Triebwerksbefestigung (152),
- eine hintere Triebwerksbefestigung (154), die zwischen einer mittleren Zone der starren Struktur (106) und einem hinteren oberen Teil des zentralen Gehäuses (112) angeordnet ist, und
- eine Vorrichtung (156) zur Aufnahme der von dem Turbinen-Strahltriebwerk (102) erzeugten Schubkräfte, wobei die vordere Triebwerksbefestigung (152) beidseits der Mittelebene (P) einen vorderen Lenker (152a-b) umfasst und jeder vordere Lenker (152a-b) gelenkig durch einen Verbindungspunkt an einem vorderen Ende der starren Struktur (106) und durch einen Verbindungspunkt an einem vorderen Beschlag (153) befestigt ist, der mit einem oberen Teil des zentralen Gehäuses (112) fest verbunden ist, und
wobei die Vorrichtung (156) zur Aufnahme der Schubkräfte des Turbinen-Strahltriebwerks zwei zentrale Lenker (158) umfasst, die beidseits der Mittelebene (P) angeordnet sind, für jeden zentralen Lenker (158) einen ersten Beschlag (204), der mit der starren Struktur (106) fest verbunden ist, und einen zweiten Beschlag (206), der mit einem vorderen Teil des zentralen Gehäuses (112) fest verbunden ist, wobei die beiden ersten Beschläge (204) unabhängig voneinander sind, wobei jeder zentrale Lenker (158) gelenkig durch eines seiner Enden an dem ersten Beschlag (204) und durch das andere seiner Enden an dem zweiten Beschlag (206) befestigt ist und wobei die hintere Triebwerksbefestigung (154) einen hinteren Lenker (157) umfasst, der gelenkig durch zwei Verbindungspunkte an einem hinteren Beschlag (155) befestigt ist, der mit dem zentralen Gehäuse (112) fest verbunden ist, und durch einen Verbindungspunkt an einem oberen Beschlag (159), der mit der starren Struktur (106) fest verbunden ist,
wobei die Antriebsbaugruppe (100) **dadurch gekennzeichnet ist, dass** jeder erste Beschlag (204) an einer der seitlichen Wände (106c) der starren Struktur (106) befestigt ist.

2. Flugzeug (100), umfassend eine Tragfläche (52) und eine Antriebsbaugruppe (100) nach dem vorhergehenden Anspruch, deren starre Struktur (106) unter der Tragfläche (52) befestigt ist.

## Claims

1. Propulsion assembly (100) for an aircraft (50), said propulsion assembly (100) having:
- a jet engine (102) having a central casing (112) around a longitudinal axis and having a vertical median plane (P) passing through the longitudinal axis,
- an attachment pylon (104) having a rigid structure (106) that takes the form of a box that has a lower wall (106a), an upper wall (106b), two lateral walls (106c) and a frontal wall (106d),
- a front engine attachment (152),
- a rear engine attachment (154) interposed between a median zone of the rigid structure (106) and a rear upper part of the central casing (112), and
- a device (156) for reacting the thrust forces generated by the jet engine (102),
wherein the front engine attachment (152) has, on either side of the median plane (P), a front rod (152a-b) and each front rod (152a-b) is fastened in an articulated manner via a connection point to a front end of the rigid structure (106) and via a connection point to a front fitting (153) as one with an upper part of the central casing (112), and
wherein the device (156) for reacting the thrust forces of the jet engine has two central rods (158) disposed on either side of the median plane (P), for each central rod (158), a first fitting (204) as one with the rigid structure (106) and a second fitting (206) as one with a front part of the central casing (112), wherein the two first fittings (204) are independent of one another, wherein each central rod (158) is fastened in an articulated manner via one of its ends to the first fitting (204) and via the other of its ends to the second fitting (206) and wherein the rear engine attachment (154) has a rear rod (157) fastened in an articulated manner via two connection points to a rear fitting (155) as one with the central casing (112) and via one connection point to an upper fitting (159) as one with the rigid structure (106),
the propulsion assembly (100) being **characterized in that** each first fitting (204) is fastened to one of the lateral walls (106c) of the rigid structure (106).

2. Aircraft (100) having a wing (52) and a propulsion assembly (100) according to the preceding claim, of which the rigid structure (106) is fastened beneath the wing (52).
